# EUROPÄISCHE PATENTSCHRIFT

(11) **EP 0 536 639 B1**
(45) Veröffentlichungstag und Bekanntmachung des Hinweises auf die Patenterteilung: **20.12.1995**
(21) Anmeldenummer: 92116813.4
(22) Anmeldetag: 01.10.1992
(51) Int. Cl.: B60T 13/58, B60T 1/08, B60T 8/18

(54) **Bremsanlage für Nutzkraftwagen mit Betriebs- und Dauerbremse**
Braking system for lorries with service brake and retarder
Système de freinage pour des camions à frein de service et ralentisseur

(30) Priorität: 09.10.1991 DE 4133430; 02.09.1992 DE 4229222
(43) Veröffentlichungstag der Anmeldung: 14.04.1993
(73) Patentinhaber: Iveco Magirus Aktiengesellschaft, D-89017 Ulm (DE)
(72) Erfinder: Haiss, Johannes, W-7901 Schnürpflingen (DE); Brandenstein, Heinz, W-7901 Illerrieden (DE)
(74) Vertreter: TER MEER STEINMEISTER & PARTNER GbR

(56) Entgegenhaltungen:
- EP-A- 0 361 708
- FR-A- 2 108 951
- FR-A- 2 312 389
- FR-A- 2 498 142
- GB-A- 2 018 374

## Beschreibung

Die Erfindung betrifft eine Bremsanlage für Nutzkraftwagen mit einer Betriebsbremse und einer Dauerbremse gemäß Oberbegriff des Anspruchs 1.

Bekannte Bremsanlagen für Nutzkraftwagen mit Betriebs- und Dauerbremse sehen linear parallelgeschaltete Retarder vor, welche mehrere Bremsstufen mit progressiver Stufung insbesondere bei unbeladenem Fahrzeug besitzen. Die grobe Stufung führt gerade bei unbeladenem Fahrzeug zu einer nachteiligen Retarderwirkung mit ruckbehafteter Verzögerung des Fahrzeugs bei einem Bremsen. Der Retarder kann zur Betriebsbremse nicht vorgeschaltet werden.

Gemäß FR-A-2 312 389 sind die oberen Bremsstufen des Retarders abschaltbar. Die Abschaltung erfolgt mittels Nockenschalter. Bei der bekannten, eingangs genannten Bremsanlage gemäß FR-A-2 312 389 wird ein zusätzlicher mechanischer Hebelschalter vergleichsweise komplizierten Aufbaus verwendet, welcher zudem kostenintentiv ist. Gleichwohl sind die bekannten oberen Bremsstufen fortschreitend bei der Überschreitung von jeweils größeren Auslenkwerten des Reglerhebels abschaltbar, und es besitzt die elektrische Steuereinrichtung jeweils ein Abschaltrelais für die abzuschaltende Bremsstufe des Retarders.

Aus DE-AS 26 52 651 ist eine Bremsanlage der eingangs genannten Art bekannt, welche zur Steuerung des Druckes im Retarder ein Druckregelventil mit mehreren Überdruckventilen verwendet. Die bekannte Bremsanlage ist jedoch vergleichsweise kompliziert aufgebaut und nur in Verbindung mit einem hydrodynamischen Wandler geeignet.

Aufgabe der Erfindung ist die Schaffung einer Bremsanlage der eingangs genannten Art, welche mit Hilfe einfacher Mittel einen im wesentlichen ruckfreien Bremsbetrieb von blattgefederten Nutzkraftwagen auch im teil- oder unbeladenem Zustand des Fahrzeugs ermöglicht.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 bis 7.

Wesen der Erfindung ist die Schaffung einer elektrischen Abschalteinrichtung für die oberen Bremsstufen eines mehrstufigen Retarders insbesondere bei teil- oder unbeladenem Fahrzeug mit blattgefederter Hinterachse und fahrzeugfestem automatisch lastabhängigen Bremsregelventil. Hierbei wird die Auslenkstellung des Reglerhebels des (ohnehin vorhandenen) ALB-Reglers durch die elektrische Steuereinrichtung mit einem Induktivsensor innerhalb bestimmter, vorgebbarer Grenzen festgestellt und ein entsprechendes elektrisches Abschaltsignal ausgelöst, welches einzelne Abschaltrelais betätigt, die die oberen Bremsstufen des mehrstufigen bremsbetriebenen Retarders abschalten. Damit entfaltet ein bremsbetriebener Retarder bei leerem oder nur teilbeladenem Fahrzeug nicht die volle Bremskraft. Entsprechend der Feinabstufung des Retarders und der Zahl der abschaltbaren Bremsstufenwird mithin ein im wesentlichen ruckfreier Bremsbetrieb eingerichtet. Es ergibt sich nicht nur ein verbesserter Fahrkomfort des Nutzfahrzeugs, sondern auch aufgrund der Ruckfreiheit eine erhöhte Fahrsicherheit.

Zweckmäßigerweise wird die (geometrische) Stufung des Retarders feingewählt. Wird ein elektrischer oder hydraulischer Retarder in sechs Stufen geschaltet, kann beispielsweise die Verzögerungswirkung der Stufen mit den Prozentsätzen 12,5/25/37,5/50/75/100 % einsetzen. Auch andere Verteilungen können sich durch Optimierung ergeben.

Durch die Erfindung wird mithin der wesentliche Nachteil bekannter Bremssysteme überwunden, der darin gesehen wird, daß die Retarderwirkung der Betriebsbremswirkung überlagert wird und sich hierdurch eine ungewünschte Progressivität der Bremswirkung insbesondere im Bereich geringer Verzögerungen ergibt.

Um auch bei leerem Fahrzeug die unerwünschten Verzögerungsrucke zu vermeiden bzw. kaum spürbar werden zu lassen, kann die Retarderwirkung bei leerem Fahrzeug (erforderlichenfalls auch bei Teilbeladung) derart reduziert werden, daß nicht mehr alle Stufen zum Einsatz kommen, sondern beispielsweise nur die ersten vier Bremsstufen, was eine Reduzierung der maximalen Retarderbremswirkung auf ca. 50% o.ä. entspricht. Dies kann entweder erzielt werden durch Anschluß der Sensoren direkt an dem durch den ALB reduzierten Bremsdruck der Hinterachse, oder durch Manipulation der Elektronik, falls der Retarder von einem im Motorwagenbremsventil befindlichen Potentiometer gesteuert wird.

Eine weitere Besonderheit der Erfindung liegt darin, daß der Retarder durch ein Potentiometer im Motorwagenbremsventil auch stufenlos vor- bzw. zugeschaltet werden kann. Die Begrenzung des Wirkungsmaximums ist auch hier durch entsprechenden Eingriff in die Steuerelektronik möglich.

Am Rande sei bemerkt, daß eine eventuelle Überbremsung der Hinterachse insofern bedeutungslos ist, als der Retarder auch von einem ABS-System überwacht und in seiner Wirkung geregelt werden kann.

Zwar ist aus DE-OS 2 023 880 eine Bremsanlage für Nutzkraftwagen mit Betriebs- und Dauerbremse in Form eines Retarders bekannt, der in Abhängigkeit von der Beladung des Fahrzeugs geregelt wird. Das Fahrzeug muß jedoch luftgefederte Achsen besitzen. Für blattgefederte Achsen ist die Bremsanlage grundsätzlich nicht geeignet. Im übrigen ist der bekannte Retarder nicht in seinen oberen Bremsstufen abschaltbar, wie dies bei der gattungsgemäßen Bremsanlage der Fall ist.

Auch ist die Verwendung eines Potentiometers in einem Motorwagen-Bremsventil zur stufenlosen Vor- bzw. Zuschaltung des Retarders zu einer Betriebsbremse grundsätzlich bekannt (vgl. FR-A-2 108 951), wie dies auch bei der Erfindung gemäß Anspruch 7 der Fall ist.

Durch die Erfindung wird (ähnlich wie gemäß EP 0 361 708 A2) in Weiterbildung eine Bremsanlage mit einem elektronisch gesteuerten Bremssystem vorgeschlagen, bei dem vorzugsweise die Bremsverzögerung durch Betätigen des Bremspedals vorgegeben wird.

Die Erfindung wird nachfolgend anhand Zweier Ausführungsbeispiele unter Bezugnahme auf die beigefügte Zeichnung näher beschrieben; es zeigen:
- Fig. 1: ein schematisches Schaltbild der oberen Abschaltstufen eines Retarders in einer Ausführungsvariante einer Bremsanlage, und
- Fig. 2 und 3: die Bremsanlage in einer zweiten Ausführungsvariante.

Eine Bremsanlage 1 für die blattgefederte Hinterachse 10 eines Nutzfahrzeugs sieht grundsätzlich ein fahrzeugfestes automatisch lastabhängiges Bremsregelventil, einen sog. ALB-Regler 3 vor, dessen Reglerhebel 4 über ein (nicht veranschaulichtes) Gestänge z.B. mit der Geberstange zwischen der ersten und der zweiten Hinterachse 10 eines Doppelachsaggregats verbunden ist. Entsprechend der Beladung des Fahrzeugs wird der Reglerhebel 3 mehr oder weniger in seiner Schwenkstellung ausgelenkt.

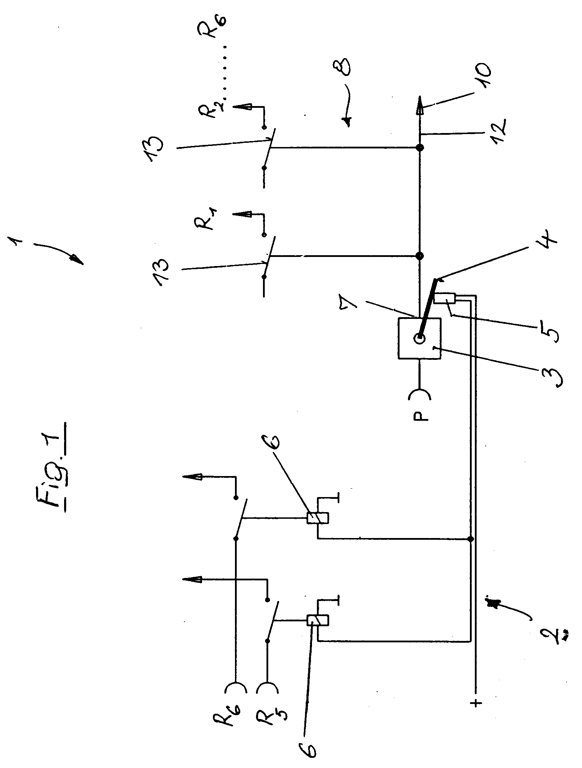

Gemäß Ausführungsvariante nach Fig. 1 ist der Druckausgang 7 des ALB-Reglers 3 über eine Bremsleitung 12 mit den Bremszylindern der Hinterachse 10 verbunden. Bei teil- oder unbeladenem Fahrzeug wird somit an der Hinterachse 10 ein reduzierter Bremsdruck eingesteuert.

Die Bremsleitung 12 bzw. der Druckausgang 7 des ALB-Reglers 3 ist ferner über eine Druckschalter-Steuerung 8 mit den einzelnen Bremsstufen R₁, R₂, ... R₆ verbunden, wobei jeder Bremsstufe jeweils ein Druckschalter 13 mit unterschiedlicher Druckschalt-Charakteristik zugeordnet ist. Der Retarder wird also bei zunehmendem Bremsdruck zunehmend in Betrieb gesetzt.

Um auch bei leerem Fahrzeug unerwünschte Bremsverzögerungsrucke zu vermeiden bzw. kaum spürbar werden zu lassen, kann die Retarderwirkung bei leerem Fahrzeug (erforderlichenfalls auch bei Teilbeladung) derart reduziert werden, daß nicht mehr alle Stufen zum Einsatz kommen, sondern beispielsweise gemäß Ausführungsvariante der Fig. 1 die letzten beiden Retarderbremsstufen R₅, R₆ abgeschaltet werden. Die Abschaltung erfolgt durch eine elektrische Steuereinrichtung 2 mit einem Induktivsensor 5 , welcher in Abhängigkeit der Auslenkstellung des Reglerhebels 4 des ALB-Reglers 3 betätigbar ist. Elektrische Abschaltsignale betätigen insbesondere das Abschaltrelais 6 der fünften und/oder der sechsten Bremsstufe R₅, R₆ des Retarders. Die Abschaltung erfolgt beispielsweise bei einer Hinterachsbelastung von 25 bis 50% der maximalen Belastung, wenn sechs Bremsstufen des Retarders vorgesehen sind. Bei Retardern, die lediglich vier Schaltstufen besitzen, beispielsweise bei elektrischen Retardern oder Wirbelstrombremsen, können analog hierzu entweder die letzte, d.h. die vierte Stufe oder die letzten beiden, d.h. die dritte und die vierte Stufe abgeschaltet werden.

Der Induktivsensor 5 kann auch ein anders gearteter Sensor sein. Er muß nicht unbedingt im Bereich des Reglerhebels 4 liegen, sondern kann auch auf ein benachbartes Gestänge einwirken, welches dem Reglerhebel 4 vorgekoppelt ist. Auch die Anordnung eines Sensors an der Geberstange zwischen erster und zweiter Hinterachse eines Doppelachsaggregates ist denkbar.

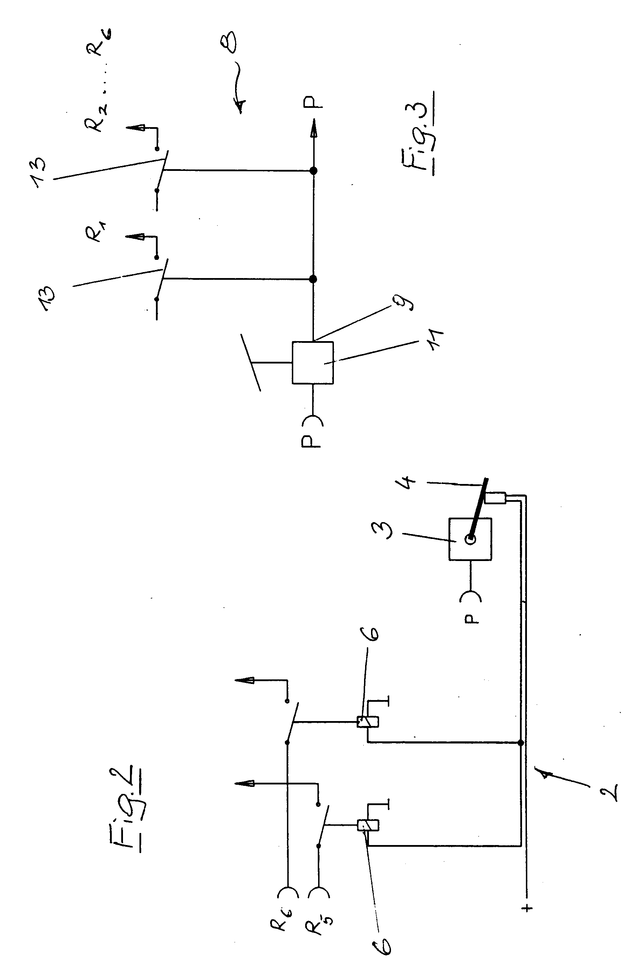

Die Ausführungsvariante nach den Fig. 2 und 3 sieht eine elektrische Steuereinrichtung 2 zur Abschaltung der oberen Bremsstufen R₅, R₆ wie nach dem Ausführungsbeispiel der Fig. 1 vor. Demgegenüber ist die Druckschalter-Steuerung 8 zur Inbetriebnahme der einzelnen Bremsstufen R₁, R₂ ... des Retarders direkt an den Ausgang eines Motorwagenbremsventils 11 angeschlossen. Durch ein Potentiometer im Motorwagenbremsventil kann der Retarder der Betriebsbremse stufenlos vor- bzw. zugeschaltet werden. Die Begrenzung des Wirkungsmaximums ist durch entsprechenden Eingriff in die Steuerelektronik möglich.

## Patentansprüche

1. Bremsanlage (1) für Nutzkraftwagen mit einer Betriebsbremse und einer Dauerbremse in Form eines mehrstufigen elektrischen oder hydraulischen Retarders, dessen obere Bremsstufen (R₅,R₆) über eine elektrische Steuereinrichtung (2) abschaltbar sind, dadurch **gekennzeichnet**, daß ein automatisches, lastabhängiges Bremsregelventil (3) mit einem Reglerhebel (4) vorgesehen ist, das fahrzeugfest mit einer blattgefederten Hinterachse (10) des Nutzkraftwagens derart in Verbindung steht, daß die Auslenkstellung des Reglerhebels (4) vom Beladungszustand des Nutzkraftwagens abhängt, und daß die elektrische Steuereinrichtung (2) einen Induktivsensor (5) zur Erfassung der Auslenkwerte des Reglershebels (4) und Auslösung elektrischer Abschaltsignale aufweist.

2. Bremsanlage nach Anspruch 1, dadurch **gekennzeichnet**, daß die oberen Bremsstufen (R₅,R₆) fortschreitend bei Überschreitung von jeweils größeren Auslenkwerten des Reglerhebels (4) abschaltbar ist.

3. Bremsanlage nach Anspruch 1 oder 2, dadurch **gekennzeichnet**, daß der Retarder fein-abgestuft ausgebildet ist, d.h. mindestens sechs Bremsstufen aufweist.

4. Bremsanlage nach einem der Ansprüche 1 bis 3, dadurch **gekennzeichnet**, daß die elektrische Steuereinrichtung (2) jeweils ein Abschaltrelais (6) für die abzuschaltende Bremsstufe (R₅,R₆) des Retarders besitzt.

5. Bremsanlage nach einem der Ansprüche 1 bis 4, dadurch **gekennzeichnet**, daß der Druckausgang (7) des ALB-Reglers (3) zu den Bremszylindern der Hinterachse (10) mit einer Druckschalter-Steuerung (8) zur Einschaltung der Bremsstufen (R₁,R₂, ...) des mehrstufigen Retarders verbunden ist (Fig. 1).

6. Bremsanlage nach einem der Ansprüche 1 bis 6, dadurch **gekennzeichnet**, daß der Retarder der Betriebsbremse vorgeschaltet, insbesondere die Druckschalter-Steuerung (8) zur Einschaltung der Bremsstufen (R₁,R₂, ...) des mehrstufigen Retarders an den Druckausgang (9) eines Motorwagen-Bremsventils (11) angeschlossen ist (Fig. 3).

7. Bremsanlage nach Anspruch 6, dadurch **gekennzeichnet**, daß ein Potentiometer im Motorwagen-Bremsventil (11) zur stufenlosen Vor- und Zuschaltung des Retarders zu der Betriebsbremse vorgesehen ist.

## Claims

1. A braking system (1) for commercial vehicles, with a service brake and a continuous service brake in the form of a multistage electric or hydraulic retarder, the upper braking stages (R_{5,}R₆) of which can be cut out via an electric control means (2), characterized in that an automatic, load-dependent brake-regulating valve (3) is provided with a regulator lever (4) which is connected in a manner fixed to the vehicle with a leaf-sprung rear axle (10) of the commercial vehicle in such a way that the deflection position of the regulator lever (4) depends on the load condition of the commercial vehicle, and in that the electric control means (2) has an inductive sensor (5) for detecting the deflection values of the regulator lever (4) and for emitting electrical cut-out signals.

2. A braking system according to Claim 1, characterised in that the upper braking stages (R_{5,}R₆) can be progressively cut out upon exceeding respectively higher deflection values of the regulator lever (4).

3. A braking system according to Claim 1 or 2, characterised in that the retarder is designed to be finely graduated, i.e. has at least six braking stages.

4. A braking system according to any one of Claims 1 to 3, characterised in that the electric control means (2) has a respective cut-out relay (6) for the braking stage (R_{5,}R₆) of the retarder to be cut out.

5. A braking system according to any one of Claims 1 to 4, characterised in that the pressure output (7) of the ALB regulator (3) to the brake cylinders of the rear axle (10) is connected to a pressure switch control system (8) for cutting in the braking stages (R_{1,}R_{2,...}) of the multistage retarder (Figure 1).

6. A braking system according to any one of Claims 1 to 5, characterised in that the retarder is connected upstream of the service brake, in particular the pressure switch control system (8) for cutting in the braking stages (R_{1,}R_{2,...}) of the multistage retarder is connected to the pressure output (9) of the motor vehicle brake valve (11) (Figure 3).

7. A braking system according to Claim 6, characterised in that a potentiometer is provided in the motor vehicle brake valve (11) for the stepless series connection and switching on of the retarder to the service brake.

## Revendications

1. Installation de frein (1) pour véhicules utilitaires comportant un frein de fonctionnement et un £rein permanent sous la forme de retardateur électrique ou hydraulique à plusieurs étages, dont les étages de frein supérieur (R₅, R₆) peuvent être coupés par une installation à commande électrique (2), caractérisée par une soupape de régulation de frein (3), automatique, dépendant de la charge, comportant un levier de régulation (4), gui est relié solidairement au véhicule à l'essieu arrière (10) du véhicule utilitaire, à suspension par ressort-lame, et en ce que le débattement du levier de régulateur (4) dépend de l'état de charge du véhicule et une installation électrique (2) de commande comporte un capteur inductif (5) pour détecter le débattement du levier de régulateur (4) et déclencher des signaux de coupure électriques.

2. Installation de frein selon la revendication 1, caractérisée en ce que les étages de frein supérieurs (R₅, R₆) peuvent être coupés progressivement lors du dépassement de valeurs de débattement chaque fois croissant du levier de régulateur (4).

3. Installation de frein selon la revendication 1 ou 2, caractérisée en ce que le retardateur est à échelon fin, c'est-à-dire qu'il comporte au moins six échelons de frein.

4. Installation de frein selon l'une des revendications 1 à 3, caractérisée en ce que l'installation de commande électrique (2) possède un relais de coupure (6) pour l'étage de frein à couper (R₅, R₆).

5. Installation de frein selon l'une des revendications 1 à 4, caractérisée en ce que la sortie de pression (7) du régulateur ALB (3) vers les cylindres de frein de l'essieu arrière (10) est reliée à une commande par commutateur de pression (8) pour brancher les étages de frein (R₁, R₅) du retardateur à plusieurs étages (figure 1).

6. Installation de frein selon l'une des revendications 1 à 6, caractérisée en ce que le retard est en amont du frein de fonctionnement, notamment la commande du commutateur de pression (8) pour brancher les étages de frein (R₁, R₂,...) du retardateur à plusieurs étages sur la sortie de pression (9) d'une soupape de frein de véhicule à moteur (figure 3).

7. Installation de frein selon la revendication 6, caractérisée par un potentiomètre prévu dans la soupape de frein de véhicule à moteur (11) pour commuter en avance et fermer le retardateur sur le frein de fonctionnement.
